Europäisches Patentamt

European Patent Office

Office européen des brevets

(19)

(11) Veröffentlichungsnummer: **0 224 432**
B1

(12) **EUROPÄISCHE PATENTSCHRIFT**

(45) Veröffentlichungstag der Patentschrift:
**08.08.90**

(21) Anmeldenummer: **86730172.3**

(22) Anmeldetag: **23.10.86**

(51) Int. Cl.⁵: **F16B 5/02**, F16B 39/28, H05K 7/18, F16B 33/00

(54) **Aus Blechteilen zusammensetzbares Tragwerk.**

(30) Priorität: **11.11.85 DE 3540329**

(43) Veröffentlichungstag der Anmeldung:
**03.06.87 Patentblatt 87/23**

(45) Bekanntmachung des Hinweises auf die Patenterteilung:
**08.08.90 Patentblatt 90/32**

(84) Benannte Vertragsstaaten:
**DE FR GB IT SE**

(56) Entgegenhaltungen:
**CA-A- 1 072 619**
**DE-A- 2 556 137**
**GB-A- 351 267**
**GB-A- 2 070 190**

**PRODUCT ENGINEERING, Band 30, 25. Mai 1959, Seiten 62-63, New York, US; F.W. WOOD Jr. et al.: "How to align mating parts"**
**"Feinmechanische Bauelemente", 1978, S.234, Carl Hauser Verlag**

(73) Patentinhaber: **Siemens Aktiengesellschaft, Wittelsbacherplatz 2, D-8000 München 2(DE)**

(72) Erfinder: **Marquardt, Ulrich, Senftenberger Ring 93, D-1000 Berlin 26(DE)**

## Beschreibung

Die Erfindung betrifft ein aus Blechteilen zusammensetzbares Tragwerk, dessen mit trichterförmigen Durchzügen, die den gleichen Trichterwinkel aufweisen und diese Durchzüge zentral durchsetzenden Öffnungen versehene Teilstücke durch Senkschrauben und Muttern verbindbar sind.

Eine Anordnung dieser Art ist beispielsweise durch die DE-A 2 556 137 bekannt geworden. Ein Anwendungsgebiet derartiger Tragwerke sind Gerüste und Gehäuse, bei denen es darauf ankommt, daß die Teile maßgenau zusammenfügbar sind und zwischen ihnen Schubkräfte übertragen werden können, wobei die Schraubverbindung nur mit einer Normalkraft beansprucht wird. Bei der Anwendung solcher Verbindungen auf Tragwerke, die im Betrieb starken Erschütterungen mit hohen Beschleunigungswerten ausgesetzt sind, hat sich jedoch gezeigt, daß die Schraubverbindungen zur Lockerung neigen. Hierzu ist es an sich bekannt, Mittel zur Schraubensicherung zu verwenden, beispielsweise selbsthemmende Muttern oder Schraubensicherungslacke. Hierin ist jedoch ein zusätzlicher Aufwand zu sehen, wobei es großer Sorgfalt bedarf, um die gewünschte Wirkung sicherzustellen.

Der Erfindung liegt die Aufgabe zugrunde, die Verbindungsstellen eines sowohl hohen statischen als auch hohen dynamischen Beanspruchungen ausgesetzten Tragwerkes eines Niederspannungs-Leistungsschalters so auszubilden, daß eine dauerhafte Verbindung der Blechteile ohne besondere Mittel zur Schraubensicherung erreicht wird. Die hier auftretenden Beanspruchungen sind höher als beispielsweise in Gerüsten von Schaltschränken, weil die starken Federspeicher der Antriebsvorrichtung hohe statische Kräfte ausüben und bei ihrer Entspannung eine schlagartige und von Schwingungen überlagerte Wirkung ausüben.

Gemäß der Erfindung wird diese Aufgabe durch folgende Merkmale gelöst:
Die Teilstücke sind als Seitenwände und diese verbindende Querträger eines Gehäuses eines Niederspannungs-Leistungsschalters ausgebildet;
als Mutter dient eine Kegelmutter, deren Mantelfläche den gleichen Winkel wie die innere Mantelfläche der Öffnung des zugehörigen Durchzuges aufweist.

Es hat sich erwiesen, daß in dieser Weise gestaltete Verbindungen in überraschender Weise beständig gegen alle praktisch vorkommenden Erschütterungen sind und damit der maßgenaue Sitz der Blechteile über die Lebensdauer eines Gerätes gewährleistet ist.

An sich ist es bekannt, daß Kegelmuttern bzw. Kegelschrauben selbsthemmende Eigenschaften haben ("Product Engineering", 25. Mai 1959, Seite 62, Beispiel 4 oder "Feinmechanische Bauelemente", Carl-Hanser Verlag, München Wien 1978, Seite 234, Bild 2.198). Für die Anlage des Kegelmantels wird dabei in einem der zu verbindenden Bauteile eine konische Vertiefung eingearbeitet, die dem vollständigen Kegelmantel der Schraube entspricht. Die Erfindung nutzt demgegenüber eine konische Fläche, die bei der Herstellung der konischen Durchzüge in den Blechteilen entsteht. Dennoch sind die Haltekraft und Beständigkeit der neuen Verbindung überraschend hoch.

Die Erfindung wird im folgenden anhand des in den Figuren dargestellten Ausführungsbeispieles näher erläutert.

Die Figur 1 zeigt eine Verbindungsstelle im Tragwerk eines Niederspannungs-Leistungsschalters in vergrößertem Maßstab im Schnitt.

In den Figuren 2 und 3 ist ein Gehäuse eines Niederspannungs-Leistungsschalters in zwei rechtwinklig zueinander stehenden Ansichten gezeigt.

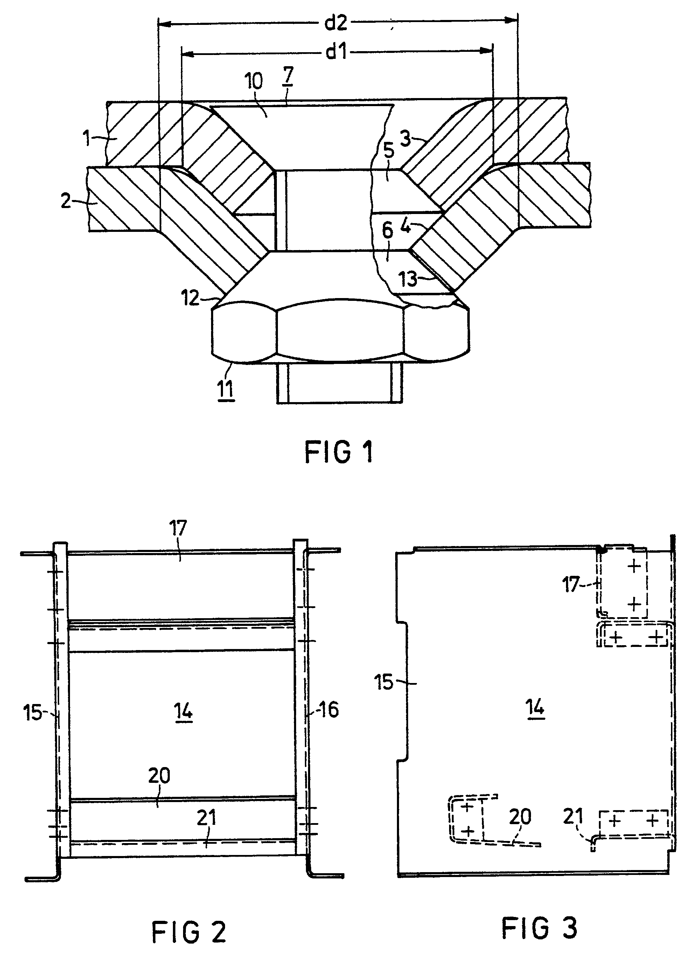

In der Figur 1 sind in vergrößerter Darstellung zwei aus Blech bestehende Teilstücke 1 und 2 eines Tragwerkes gezeigt, die in gleicher Weise mit trichterförmigen Durchzügen oder Einprägungen 3 bzw. 4 versehen sind. Beide Durchzüge weisen den gleichen Winkel auf, so daß die Teilstücke 1 und 2 im zusammengelegten Zustand auch im Bereich der Durchzüge ohne Zwischenraum aneinander anliegen. In bekannter Weise ist hierbei der Ausgangsdurchmesser d1 des Durchzuges 3 des oberen bzw. äußeren Teilstückes 1 kleiner als der Ausgangsdurchmesser d2 des Durchzuges 4 des unteren, bzw. inneren Teilstückes 2. Zentrale Öffnungen 5 und 6 der Durchzüge 3 bzw. 4 werden von einer Senkschraube 7 durchsetzt, deren Kopf 10 mit der Oberfläche des Teilstückes 1 bündig abschließt oder dieser gegenüber geringfügig zurücksteht. Auf das Gewinde der Senkschraube 7 ist eine Kegelmutter 11 aufgeschraubt, deren Mantelfläche 12 den gleichen Kegelwinkel wie die innere Mantelfläche 13 der Öffnung 6 des Durchzuges 4 besitzt. Wird diese Schraubverbindung mit den zulässigen Kräften angezogen, so stellt sich eine solche Verspannung der Teilstücke 1 und 2 ein, daß über die vorgesehene feste Verbindung der Teilstücke 1 und 2 hinaus eine gute Sicherung gegen ein Selbstlockern unter dem Einfluß von Schwingungen, Erschütterungen und Stößen besteht. Es ist daher entbehrlich, besondere Mittel zur Schraubensicherung anzuwenden, wie dies ansonsten üblich ist.

Die Teilstücke 1 und 2 gemäß der Figur 1 können Bestandteil eines Tragwerkes sein, das in den Figuren 2 und 3 schematisch gezeigt ist. Es handelt sich hierbei um ein Gehäuse 14 eines Niederspannungs-Leistungsschalters für einen Nennstrom von 1000 Ampere oder größer. Ein solches Gehäuse ist starken Kräften aufgrund einer Dauerbeanspruchung durch Federspeicher ausgesetzt. Ferner treten beim Schalten starke Erschütterungen mit hohen Beschleunigungswerten auf. Diesen Kräften können Stromkräfte mit einer von der jeweiligen Netzfrequenz abhängigen Frequenz überlagert sein.

An den in den Figuren 2 und 3 mit strichpunktierten Linien gekennzeichneten Stellen befinden sich Schraubverbindungen gemäß der Figur 1.

Durch diese werden Seitenwände 15 und 16 mit Querträgern (17; 20 und 21) verbunden. Die gezeigten Teile sind lediglich Beispiele für tragende Elemente eines solchen Gehäuses; offensichtlich könnten auch weitere oder sinngemäß wirkende Teile in der beschriebenen Weise miteinander verbunden werden, z. B. Zwischenwände zur Lagerung von Wellen oder zur Anbringung von Zubehörteilen.

## Patentansprüche

Aus Blechteilen zusammensetzbares Tragwerk (14), dessen mit trichterförmigen Durchzügen (3, 4), die den gleichen Trichterwinkel aufweisen und diese Durchzüge (3, 4) zentral durchsetzenden Öffnungen (5, 6) versehene Teilstücke (1, 2) durch jeweils eine Senkschraube (7) und eine Mutter (11) verbindbar sind, gekennzeichnet durch folgende Merkmale:

a) die Teilstücke (1, 2) sind als Seitenwände (15, 16) und diese verbindende Querträger (17; 20, 21) eines Gehäuses (14) eines Niederspannungs-Leistungsschalters ausgebildet;

b) als Mutter dient eine Kegelmutter (11), deren Mantelfläche (12) den gleichen Winkel wie die innere Mantelfläche (13) der Öffnung (6) des zugehörigen Durchzuges (4) aufweist.

## Claims

A supporting framework (14) which can be assembled from sheet metal parts, said parts (1, 2) having funnel-shaped passages (3, 4) with the same funnel angle and having central openings (5, 6) through said passages so that said parts can be connected by a respective countersunk bolt (7) and nut (11), characterised by the following features:

a) the parts (1, 2) comprise side walls (15, 16) and transverse girders (17; 20, 21) connecting said walls of a housing (14) of a low-voltage circuit breaker;

b) the nut is a cone nut (11) whose generated surface (12) has the same angle as the inner generated surface (13) of the opening (6) of the associated passage (4).

## Revendications

Structure se composant de pièces de tôle (14), dont les pièces (1, 2), munies de parties de traversée (3, 4) en forme d'entonnoir ayant le même angle, et d'ouvertures (5, 6) passant au centre de ces parties de traversée (3, 4), peuvent être réliées par une vis à tête conique (7) et par un écrou (11), remarquable par les caractéristiques suivantes:

a) les pièces (1, 2) sont constituées sous la forme de panneaux pièces latéraux (15, 16) et de traverses (17; 20, 21), les reliant, d'un carter (14) d'un interrupteur de puissance basse tension;

b) comme écrou, on se sert d'un écrou conique (11), dont la surface latérale (12) fait le même angle que la surface latérale (13) intérieure de l'ouverture (6) de la pièce de traversée (4) correspondante.

**FIG 1**

**FIG 2**

**FIG 3**